# EUROPÄISCHE PATENTANMELDUNG

(11) **EP 2 860 850 A2**
(43) Veröffentlichungstag der Anmeldung: **15.04.2015**
(21) Anmeldenummer: 14002388.8
(22) Anmeldetag: 11.07.2014
(51) Int. Cl.: H02K 5/22, A01B 63/06, A01B 73/04

(54) **Motorisch angetriebene Werkzeugmaschineneinheit**

(30) Priorität: 11.07.2013 DE 102013011594
(71) Anmelder: Franz Kessler GmbH, 88422 Bad Buchau (DE)
(72) Erfinder: Schmid, Gerold, 88527 Unlingen (DE); Pfeiffer, Wolfgang, 94559 Niederwinkling (DE)
(74) Vertreter: Otten, Roth, Dobler & Partner

(57) **Zusammenfassung**

Es wird eine motorisch angetriebene Werkzeugmaschineneinheit wie ein Mehrachsendrehkopf, eine Motorspindel, ein Drehtisch oder dergleichen mit einer einen elektromagnetischen Stator (1) umfassende Statoreinheit und einer wenigstens eine um eine Drehachse drehbare Rotorwelle aufweisende Rotoreinheit (14), wobei die Statoreinheit eine erste Verbindungsvorrichtung (4, 9) zum elektrisch leitenden Verbinden wenigstens eines Spulenanschlusses und/oder eines Statorsensors mit einer zweiten Verbindungsvorrichtung (2) einer elektrischen Energieversorgung und/oder einer Sensorauswerteeinheit umfasst, wobei wenigstens eine lösbar verbindbare Trennstelle zum Trennen und Verbinden der ersten Verbindungsvorrichtung (4, 9) mit der zweiten Verbindungsvorrichtung (2) vorgesehen ist, vorgeschlagen, die die Nachteile des Stands der Technik beseitigt. Dies wird erfindungsgemäß dadurch erreicht, dass die lösbar verbindbare Trennstelle und/oder die erste Verbindungsvorrichtung (4, 9) innerhalb der Kontur des Stators (1) angeordnet ist.

## Beschreibung

Die Erfindung betrifft eine motorisch angetriebene Werkzeugmaschineneinheit wie einen Mehrachsendrehkopf, eine Motorspindel, einen Drehtisch oder dergleichen mit einer einen elektromagnetischen Stator umfassenden Statoreinheit und einer wenigstens eine um eine Drehachse drehbare Rotorwelle aufweisende Rotoreinheit nach dem Oberbegriff des Anspruchs 1.

### Stand der Technik

Motorspindeln oder Drehtische oder dergleichen werden für Werkzeugmaschinen häufig als Torquemotoren ausgebildet. Die zur Drehmomenterzeugung notwendigen Ströme bzw. elektrische Energie werden über Kabel dem Elektromotor zugeführt. Die Kabel werden meistens über viele Meter durch die Werkzeugmaschine bzw. zu einer elektrischen Energiequelle geführt. Hierfür werden die Spulenenden des elektromagnetischen Antriebssystems mit elektrischen Anschlusskabeln an einer Verbindungsstelle verbunden.

Die Verbindungsstelle zwischen elektrischem Anschlusskabel und elektrischen Spulen des Motors werden in unterschiedlicher Weise derzeit ausgeführt. So werden einerseits diese Verbindungsstellen unmittelbar an den Spulen mit den elektrischen Anschlusskabeln unlösbar verbunden, wobei in einem nachfolgenden Herstellungsprozessschritt die Spulen einschließlich dieser unlösbaren Verbindungsstelle vielfach mittels einer Gussmasse umgossen werden. Diese Gussmasse umschließt nach dem Aushärten die Spulen und bildet zum Teil die Innenwand des Stators, die dem drehbaren Rotor gegenüberliegend angeordnet ist. Auf der außenliegenden Mantelfläche der Gussmasse bzw. des Spulensystems ist meistens ein Kühlgehäuse bzw. ein Statorgehäuse angeordnet und mit dieser vergossen.

Andererseits sind bereits lösbar verbindbare Steckverbinder für entsprechende Motorspindeln bzw. Drehtische oder dergleichen bekannt. Beispielsweise sind in der DE 102 35 632 B4 der Anmelderin bereits Einzelsteckverbinder für diese elektrische Energieversorgungskabel offenbart. Hierbei wird wiederum wie oben beschrieben eine unlösbare Verbindungsstelle mit den Spulenenden vorgesehen und zudem unmittelbar am Statorgehäuse eine lösbar verbindbare Trennstelle des elektromagnetischen Antriebssystems des Stators realisiert, um die elektrische Energieversorgung bei Bedarf vom Motor zu trennen und wieder herzustellen.

Alternativ hierzu sind in den letzten Jahrzehnten vielfach Ausführungen mit einer Stromschiene in einem Anschlussgehäuse und einer mittels Schraubfixierung lösbar verbindbaren Trennstelle zur Verbindung der elektrischen Anschlusskabel mit dem elektrischen Antriebssystem des Stators im Einsatz.

Nachteilig bei den bisherigen Systemen ist jedoch, dass unter anderem bei der Herstellung entsprechender Motoren bzw. Statoren zum einen die nicht lösbaren zum Teil viele Meter langen Anschlusskabel bei nachfolgenden Herstellungsprozessschritten wie beispielsweise beim Vergießen der Spulen, Anbringen bzw. Justage des Statorgehäuses erheblich stören. Entsprechendes trifft auch auf die Ausführungen mit Stromschienen bzw. Anschlussgehäuse oder Steckverbinder etc. zu, da diese außen am Stator bzw. Statorgehäuse angeordnet sind und bei einzelnen Herstellungsprozessschritten oder der Montage bzw. Demontage erheblich stören.

Darüber hinaus ist die Abdichtung der lösbar verbindbaren Trennstelle mit erheblichem Aufwand verbunden bzw. bei einzelnen Ausführungsformen nur unbefriedigend oder gar nicht realisierbar. Eine Abdichtung des Stators gegenüber Spritzwasser bzw. Kühlschmiermitteln oder dergleichen ist jedoch gerade bei Werkzeugmaschinenanwendungen von großer Bedeutung.

### Aufgabe und Vorteile der Erfindung

Aufgabe der Erfindung ist es demgegenüber, eine elektromotorisch angetriebene Werkzeugmaschineneinheit wie ein Mehrachsendrehkopf, eine Motorspindel, ein Drehtisch oder dergleichen vorzuschlagen, die die Nachteile des Stands der Technik beseitigt.

Diese Aufgabe wird, ausgehend von einer Werkzeugmaschineneinheit der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Werkzeugmaschineneinheit dadurch aus, dass die lösbar verbindbare Trennstelle und/oder die erste Verbindungsvorrichtung innerhalb der Kontur des Stators angeordnet sind.

Die Anordnung der lösbar verbindbaren Trennstelle bzw. der ersten Verbindungsvorrichtung innerhalb der Kontur bzw. innerhalb der Umrisslinie des Stators, insbesondere innerhalb des Statorgehäuses, verbessert die Herstellung des Stators sowie die Möglichkeit einer Abdichtung des Stators bzw. der Werkzeugmaschineneinheit in erheblichem Maß.

Als Stator im Sinn der Erfindung wird eine Baueinheit der Statoreinheit verstanden, die zumindest das elektromagnetische Antriebssystem umfasst, insbesondere die Antriebsspulen und Motorbleche. Der Stator bzw. die Baueinheit weist eine äußere und eine innere, konzentrische Mantelfläche und zwei im Wesentlichen planparallele Stirnseiten auf bzw. weist zumindest eine zu wenigstens einer oder beiden Mantelflächen orthogonal ausgerichtete Stirnseite auf.

Optional umfasst diese Baueinheit an der äußeren Mantelfläche beispielsweise ein Kühlgehäuse und/oder ein Statorgehäuse und an einer oder beiden Stirnseiten vorzugsweise je ein planes Ringelement bzw. eine plane Stirnfläche. Stirnseitig können jedoch auch das Kühlgehäuse und/oder das Statorgehäuse eine oder beide plane Stirnflächen des Stators umfassen.

So ist vorteilhafterweise der Stator im Wesentlichen als Zylinderring ausgebildet. Die Planparallelität der Stirnseiten sowie die Konzentrizität bzw. Parallelität der beiden Mantelflächen und/oder die orthogonale Ausrichtung einer oder beider Stirnseiten in Bezug auf eine oder beide Mantelflächen des Stators sind in Werkzeugmaschinen für deren Bearbeitungsgenauigkeit von entscheidender Bedeutung.

Die Kontur bzw. der Umriss oder eine betreffende Querschnittsfläche des Stators im Sinn der Erfindung wird im Wesentlichen durch die Stirnseiten bzw. Stirnflächen und die Mantelflächen des Stators bzw. der Baueinheit definiert. Innerhalb dieser Kontur sind gemäß der Erfindung die lösbar verbindbare Trennstelle und/oder die erste Verbindungsvorrichtung angeordnet.

Die Statoreinheit umfasst neben dem Stator bzw. dieser Baueinheit zudem auch weitere Komponenten wie z.B. die Lagerung der Rotorwelle, die zweite Verbindungsvorrichtung bzw. ein Anschlussstecker und ggf. weitere Komponenten des Kühlsystems oder ggf, Montageflansche/-elemente etc.

Gemäß der Erfindung sind keine störenden, meterlangen Anschlusskabel bei der Fertigstellung des Stators und auch keine überstehenden bzw. auskragenden Teile der ersten Verbindungsvorrichtung der Trennstelle vorhanden, sodass beim Handling des Stators eine Beschädigung bzw. Beeinträchtigung durch diese bzw. von diesen wirkungsvoll verhindert ist.

Zudem wird auch die exakte Endbearbeitung und Justage des Stators erfindungsgemäß verbessert. So kann beispielsweise ein Kühlgehäuse und/oder ein Statorgehäuse mittels spanbearbeitender Verfahren nach-/endbearbeitet werden, ohne dass überstehende Teile die Positionierung des Stators hierbei stören. Somit kann eine exakte Bearbeitung bzw. Herstellung der gewünschten Form des Stators und somit eine exakte Ausrichtung/Positionierung des Stators im eingebauten Zustand verwirklicht werden. Bei modernen Werkzeugmaschinen ist die Exaktheit der Ausformung des Stators bzw. der Werkzeugmaschineneinheit für den späteren Einsatz von entscheidender Bedeutung. Gerade hier sind ständig steigende Anforderungen zu erfüllen.

Auch die Möglichkeit der Abdichtung wird durch die Erfindung wesentlich verbessert. So kann eine vorteilhafte Abdichtung durch den Stator bzw. das Statorgehäuse realisiert werden.

Vorteilhafterweise ist die lösbar verbindbare Trennstelle und/oder die erste Verbindungsvorrichtung innerhalb einer Stirnseite und innerhalb einer Mantelfläche des Stators angeordnet. Vorzugsweise weist der Stator ein Kühl- und/oder Statorgehäuse auf, das die Mantelfläche des Stators bildet. Zudem weist der Stator vielfach als stirnseitige Abgrenzung bzw. Stirnfläche eine Platte oder dergleichen auf.

Weiterhin kann beispielsweise innerhalb des Statorgehäuses eine Kühlvorrichtung angeordnet werden, die beispielsweise ein Kühlgehäuse aufweist, das mit dem Statorgehäuse vorteilhafte Kühlkanäle ausbildet. Vorzugsweise ist die lösbar verbindbare Trennstelle und/oder die erste Verbindungsvorrichtung innerhalb des Statorgehäuses und/oder innerhalb des Kühlgehäuses und/oder innerhalb der stirnseitigen Platte bzw. Stirnfläche angeordnet.

Vorteilhafterweise weist die lösbar verbindbare Trennstelle und/oder die erste Verbindungsvorrichtung keinen Überstand bzw. keine Auskragung über eine Außenseite und/oder Mantelfläche und/oder Stirnseite des Stators auf. Hierdurch wird die erste Verbindungsvorrichtung bereits bei der Herstellung wirkungsvoll vor Beschädigung geschützt. Andererseits wird wirkungsvoll verhindert, dass überstehende Teile bzw. Komponenten der ersten Verbindungsvorrichtung bzw. der Trennstelle bei der Herstellung des Stators sich störend auf einzelne, nachfolgende Herstellungsprozessschritte auswirken könnten.

Darüber hinaus wird durch die vorteilhafte Trennstelle gemäß der Erfindung erreicht, dass beispielsweise bei der Montage oder Demontage der erfindungsgemäßen Werkzeugmaschineneinheit das aufwendige Einziehen bzw. Demontieren der meterlangen Anschlusskabel wie beim Stand der Technik entfällt. Auch steht kein überstehendes Anschlussgehäuse wie bei einem anderen Stand der Technik über die Kontur des Stators bzw. des Statorgehäuses und/oder dessen Stirnseite hinaus, was bei beengten Platzverhältnissen in modernen Werkzeugmaschinen von großem Vorteil ist.

Darüber hinaus kann die vorteilhaft angeordnete Trennstelle wirkungsvoll abgedichtet werden, sodass nicht nur der elektrische Anschluss der Werkzeugmaschineneinheit besser abdichtbar ist, sondern hierdurch die gesamte Werkzeugmaschineneinheit gegenüber eindringender Flüssigkeit wesentlich besser abdichtbar ist. Dies ist gerade durch den Einsatz von Kühlschmiermittel oder dergleichen bei Werkzeugmaschinenanwendungen wie Drehtische oder Motorspindeln von erheblichem Vorteil.

Vorzugsweise weist der Stator wenigstens eine elektromagnetische Spule, vorteilhafterweise zahlreiche elektromagnetische Spulen auf. Vorzugsweise weist die Rotoreinheit bzw. der Rotor wenigstens ein Permanentmagnet bzw. zahlreiche Permanentmagnete auf. Hierdurch entfällt die elektromagnetische Energieversorgung der Rotoreinheit, sodass ausschließlich der Stator eine elektrische Energieversorgung bzw. Anschlusskabel aufweist.

Dementsprechend kann durch eine wirkungsvolle Abdichtung der elektrischen Energieversorgung des Stators die Abdichtung der gesamten Werkzeugmaschineneinheit verbessert werden, vor allen durch eine Verbesserung der Abdichtbarkeit der lösbar verbindbaren Trennstelle.

In einer vorteilhaften Variante der Erfindung ist ein verfestigtes und/oder erhärtetes Gusselement wenigstens teilweise an der ersten Verbindungsvorrichtung angeordnet und/oder ist ein verfestigtes und/oder erhärtetes Gusselement wenigstens teilweise als Ummantelung der ersten Verbindungsvorrichtung ausgebildet. Hiermit wird erreicht, dass die erste Verbindungsvorrichtung gegenüber dem Inneren des Stators bzw. im Inneren des Stators wirkungsvoll und vollständig abgedichtet ist. Durch das im flüssigen Zustand des Gusselementes vollständige und umfassende Anliegen der Gussflüssigkeit und dem nachfolgenden Verfestigen bzw. Aushärten der Gussflüssigkeit wird ein vorteilhaftes flächiges Abdichten der ersten Verbindungsvorrichtung nach innen verwirklicht. So wird eine besonders vorteilhafte Abdichtung der ersten Verbindungsvorrichtung gegenüber dem Gusselement bzw. gegenüber dem Innenraum des Stator erreicht. Durch diese vorteilhafte Ausführungsform der Erfindung kann eine hohe Anforderung an die Dichtigkeit der Trennstelle erfüllt werden. Eine besonders dichte Trennstelle kann eine vollständige Dichtigkeit des gesamten Motors bzw. der Werkzeugmaschineneinheit gewährleisten. Hierdurch kann beispielsweise die IP-Schutzklasse IP67 oder sogar IP68 erfüllt werden. Hierdurch können neuartige Anwendungsmöglichkeiten für eine erfindungsgemäße Werkzeugmaschineneinheit realisiert werden.

Vorzugsweise ist das Gusselement als elektrische Isolationsschicht zum elektrischen Isolieren wenigstens einer elektromagnetischen Spule bzw. der elektromagnetischen Antriebskomponenten ausgebildet. Hierdurch wird die Herstellung des erfindungsgemäßen Stators in vorteilhafter Weise verbessert. So kann die Spule bzw. die Spulen des Stators in einem Arbeitsschritt umgossen werden, wobei gleichzeitig die erste Verbindungsvorrichtung ebenfalls umgossen und somit in vorteilhafter Weise abgedichtet wird. Zugleich kann hierbei auch ein vorteilhaftes Kühlgehäuse und/oder Statorgehäuse mittels der Gussflüssigkeit vergossen und entsprechend abgedichtet werden. So werden in vorteilhafter Weise nicht nur die Spulen, sondern auch die erste Verbindungsvorrichtung sowie gegebenenfalls das Kühlgehäuse bzw. Statorgehäuse fest fixiert und zugleich wirkungsvoll abgedichtet.

In einer besonderen Weiterbildung der Erfindung weist die erste und/oder zweite Verbindungsvorrichtung wenigstens ein Dichtelement zum flüssigkeitsdichten Abdichten auf. Beispielsweise ist das Dichtelement als O-Ring oder dergleichen ausgebildet. Hiermit wird in vorteilhafter Weise eine vollständig dichte Trennstelle realisierbar. So ist die erste Verbindungsvorrichtung einerseits durch das vorteilhafte Gusselement nach innen wirkungsvoll abgedichtet und mit dem vorteilhaften Dichtelement gegenüber der zweiten Verbindungsvorrichtung oder einem anderen Statorelement oder dergleichen nach außen abgedichtet, sodass im verbundenen bzw. zusammengesteckten Zustand eine vollständig flüssigkeitsdichte Trennstelle verwirklicht werden kann.

Vorteilhafterweise weist die erste und/oder zweite Verbindungsvorrichtung jeweils ein planes Verbindungselement auf, zum Beispiel eine ebene Metallplatte oder dergleichen. Hiermit kann beispielsweise unter Zuhilfenahme eines Dichtelementes wie eines O-Rings oder dergleichen eine vollständige flüssigkeitsdichte Abdichtung der Trennstelle in vorteilhafter Weise realisiert werden.

In einer besonderen Ausführungsform der Erfindung weist der Stator wenigstens eine zwischen der ersten und der zweiten Verbindungsvorrichtung angeordnete Zwischenplatte auf. Vorzugsweise ist die Zwischenplatte als Stirnseitenplatte ausgebildet. Eine derart vorteilhafte Begrenzung des Stators auf dessen Stirnseite mittels der vorteilhaften Zwischenplatte, die vorzugsweise als Statorgehäuseelement ausgebildet ist, kann einerseits eine Verbesserung der Steifigkeit des Stators realisiert werden. Andererseits kann die Möglichkeit der wirkungsvollen bzw. vollständigen Abdichtung des Stators gegenüber Flüssigkeiten weiter verbessert werden.

Vorzugsweise weist die Zwischenplatte auf zwei gegenüberliegenden Seitenflächen jeweils wenigstens ein Dichtelement zum Abdichten der Zwischenplatte gegenüber der ersten und/oder der zweiten Verbindungsvorrichtung auf. Beispielsweise ist eines der Dichtelemente derart ausgebildet, dass dies das Statorgehäuse über den gesamten Umfang abdichtet. Das bedeutet, dass beispielsweise ein Dichtelement als O-Ring oder dergleichen ausgebildet ist, das stirnseitig am Stator angeordnet ist und sich längs des gesamten Umfangs bzw. der gesamten Mantelumfangsfläche des Stators bzw. des Statorgehäuses und/oder des Kühlgehäuse erstreckt. Demzufolge kann der Innenraum der Werkzeugmaschineneinheit bzw. des Stators in vorteilhafter Weise vollständig durch ein derartiges Dichtelement abgedichtet werden.

Vorzugsweise weist der Stator ein Kühlgehäuse auf. Hiermit wird eine vorteilhafte Kühlung des Stators realisierbar. Beispielsweise wird das Kühlgehäuse mit der oder den Spulen sowie der ersten Verbindungsvorrichtung in einem Herstellungsprozessschritt gemeinsam vergossen. Vorzugsweise ist das Kühlgehäuse wenigstens teilweise als Ummantelung des Gusselementes ausgebildet.

In einer besonderen Weiterbildung der Erfindung weist das Kühlgehäuse und/oder eine Stirnseite des Kühlgehäuses wenigstens eine sich über den gesamten Umfang erstreckende, durchgängige Dichtfläche auf. Hierdurch kann der Stator bzw. das Kühlgehäuse vollständig flüssigkeitsdicht abgedichtet werden. Beispielsweise mit Hilfe eines O-Rings oder dergleichen wird eine vollständige Abdichtung des Stators mit Hilfe des Kühlgehäuses bzw. dessen die Stirnseite und/oder alternativ oder in Kombination hierzu mittels des Statorgehäuses bzw. dessen Stirnseite verwirklicht.

In einer besonderen Ausführungsform der Erfindung wird eine Abschlussplatte vorgesehen, die eine Stirnseite des Stators wenigstens teilweise abdeckt. Diese Abschlussplatte kann verschiedene Funktionen in sich vereinen.

So kann durch den Einsatz der Abschlussplatte der Motor komplett gekapselt in die jeweilige Umgebungskonstruktion (zum Beispiel Drehtisch oder Mehrachsendrehkopf) eingebunden werden und ist somit dicht gegen Flüssigkeiten und Staub geschützt, insbesondere auf der Seite des Kabelabgangs. Hierzu wird die Abschlussplatte gegen die Stirnfläche des Stators mit einer Dichtung, beispielsweise einem O-Ring abgedichtet. Auf der anderen Seite der Abschlussplatte werden die Stecker, die als Ansahlussleiste dienende Zwischenplatte sowie der Anschluss etwaiger Signal- und/oder Sensorleitungen ebenso gegenüber der Abschlussplatte abgedichtet.

Die Abschlussplatte kann auch zur Befestigung des Motors in der Umgebungskonstruktion und somit zur Kraft- beziehungsweise Drehmomentübertragung an die Umgebungsbauteile genutzt werden.

Schließlich ist die Ausgestaltung der Abschlussplatte, insbesondere deren Dicke variabel und kann an die Erfordernisse der Umgebungskonstruktion des Motors angepasst werden. Eine zuverlässige Kontaktierung der Stecker bei unterschiedlich dicken Abschlussplatten kann dabei durch variable Eintauchtiefen der Stecker in die Buchsenkontakte bewirkt werden.

Generell kann als besondere Ausführungen der Erfindung z.B. eine Serie von vorteilhaften Werkzeugmaschineneinheiten als sogenannte Modulbau-Motoren, insb. als Torquemotoren, ausgebildet werden. So sind in vorteilhafter Weise gleichartig aufgebaute, jedoch unterschiedlich groß dimensionierte Motoren herstellbar, wobei diese sich v.a. in Bezug auf die Statordurchmesser und/oder der in Richtung Drehachse bezogene Statorlänge bzw. deren Leistung unterscheiden.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische perspektivische Ansicht eines Statorrings mit Anschlussstecker,
- Figur 2: eine schematische perspektivische Ansicht des Statorrings gemäß Figur 1 ohne Anschlussstecker,
- Figur 3: einen schematischen Schnitt durch einen Statorring gemäß Figur 2 mit Anschlussstecker und zusätzlicher Zwischenplatte,
- Figur 4: einen weiteren schematischen Schnitt durch den Statorring gemäß Figur 2 mit einem Sensorstecker und der zusätzlichen Zwischenplatte,
- Figur 5: eine schematische perspektivische Ansicht eines Anschlusssteckers gemäß Figur 1 bzw. 3 und
- Figur 6: eine perspektivische Darstellung eines Stators mit Anschlussstecker unter Verwendung einer ersten Ausführungsform einer Abschlussplatte und
- Figur 7: eine Darstellung entsprechend Figur 6 mit einer andern Ausführungsform einer Abschlussplatte.

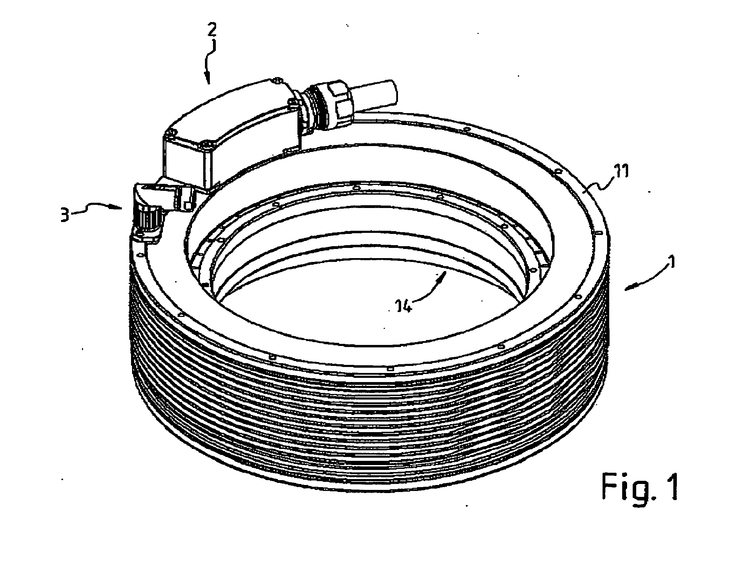

In Figur 1 ist schematisch eine perspektivische Darstellung eines erfindungsgemäßen Stators 1 mit einem montierten Leistungsstecker 2 sowie einem montierten Sensorstecker 3 und einem Rotorring 14 mit Permanentmagneten 15 dargestellt. Lediglich aus Gründen der Übersichtlichkeit wurde hier auf die Darstellung eines Statorgehäuses bzw. weiterer Komponenten insbesondere der Rotoreinheit verzichtet.

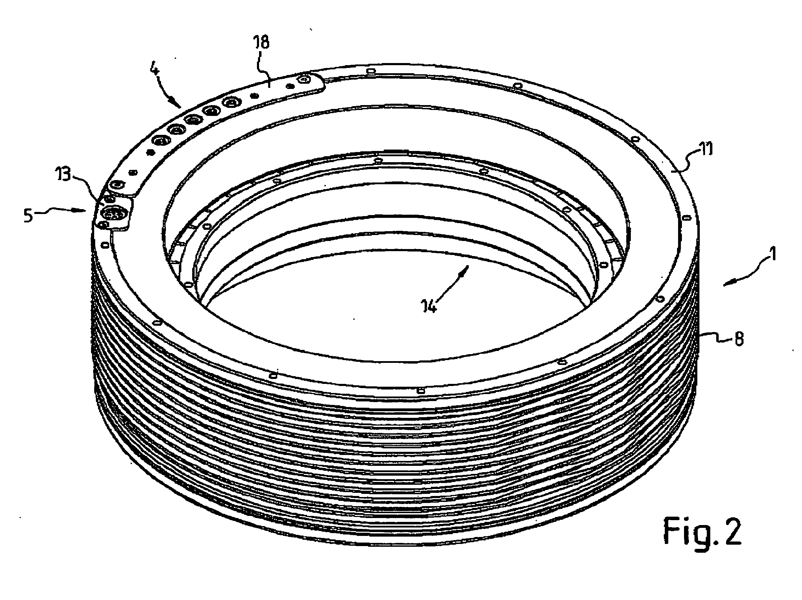

In Figur 2 ist der Stator 1 ohne die beiden Stecker 2 bzw. 3 perspektivisch dargestellt. Zudem wird deutlich, dass der Stator 1 Steckerbuchsen 4 für den Leistungsstecker 2 und für den Sensorstecker 3 eine mehrpolige Steckerbuchse 5 aufweist. Die Steckerbuchse 5 ist mit einem Sensor, insbesondere einem Temperatursensor zur Ermittlung der Motortemperatur bzw. der Statortemperatur, im Inneren des Stators 1 verbunden.

Die Steckerbuchsen 4 sind für die elektrischen Anschlüsse U, V, PE, W sowie Y vorgesehen. Diese sind im Innern des Stators 1 in vorteilhafter Weise mit Statorspulen 6 bzw. Spulenenden unlösbar verbunden, sodass im Betrieb über den Stecker 2 bzw. die Buchsen 4 der Elektromotor bzw. die Spulen 6 mit elektrischer Energie versorgt werden können, d.h. vorteilhafterweise mittels Wechselspannung.

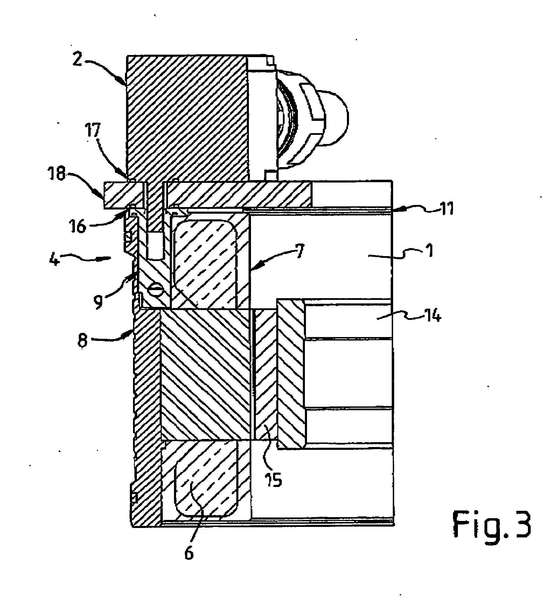

In Figur 3 ist schematisch ein Schnitt durch den Stator 1 und den Leistungsstecker 2 dargestellt. Hier sind die Spulen 6 im Schnitt schematisch dargestellt. Um die Spule 6 ist ein Verguss 7 bzw. eine Gussmasse 7 vorhanden. Dieser Verguss 7 wird bei der Herstellung des Elektroantriebs bzw. Stators 1 im flüssigen Zustand und in einer Gussform um die Spule 6 herum vergossen, wobei insbesondere ein Kühlgehäuse 8 die flüssige Vergussmasse 7 auf einer Seite bzw. Fläche begrenzt und durch das Aushärten bzw. Verfestigen der zuvor flüssigen Vergussmasse 7 mit dieser bzw. den Spulen 6 fest verbunden und zugleich abgeschlossen sowie abgedichtet wird.

In vorteilhafter Weise werden beim Vergießen der flüssigen Vergussmasse 7 zugleich die Buchsen 4 sowie 5 bzw. deren Isolationskörper 9, 10 als auch vorzugsweise ein an einer Stirnseite des Stators 1 angeordneter Statorring 11 um-/ eingegossen. Bei der in Figur 2 dargestellten Ausführungsform sind zusätzlich beim Eingießen Steckerplatten 12 am Kühlgehäuse 8 vorhanden bzw. angeschraubt und diese werden ebenfalls beim Herstellungsschritt Vergießen bzw. bei der Einbringung des noch flüssigen Vergusses 7 um-/eingegossen. Hierdurch werden die Buchsen 4, 5 gegenüber dem Stator 1 nach innen durch die an die Komponenten 4, 5, 11, 12 sowie 13 und 8 mit der Vergussmasse 7 bzw. mit dem erstarrten bzw. verfestigten Verguss 7 nicht nur fest bzw. unlösbar miteinander verbunden, sondern diese Komponenten werden zugleich nach innen wirkungsvoll und vollständig flüssigkeitsdicht abgedichtet.

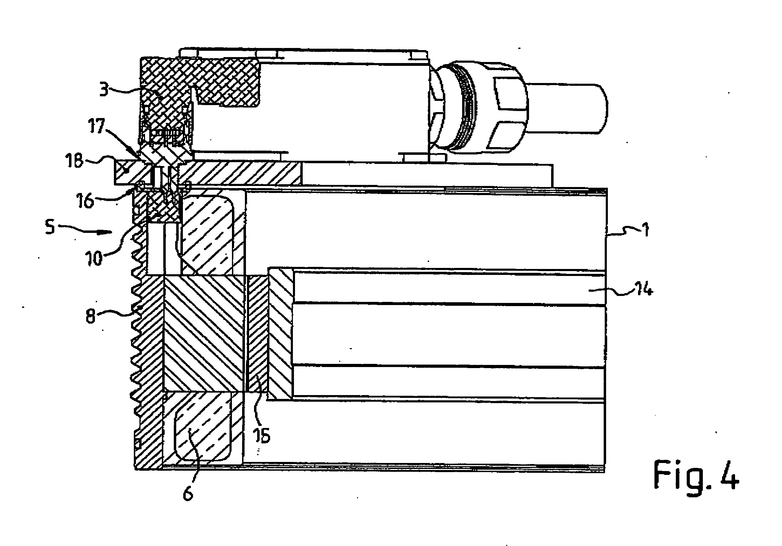

In den schematischen Schnittdarstellungen gemäß Figur 3 und 4 wird deutlich, dass die Vergussmasse bzw. der Verguss 7 flächig mit den Komponenten 4, 5, 8, 11, 12, 13 unmittelbaren Kontakt haben bzw. flächig mit diesem Verguss 7 verbunden sind.

Darüber hinaus werden v.a. in den Figuren 3 und 4 ein Teil des Rotors 14 sowie Magnete 15 verdeutlicht. Zwischen dem Rotor 14 bzw. den Magneten 15 ist ein Luftspalt gegenüber dem Stator 1 bzw. den Spulen 6 und deren Blechpacket vorhanden.

Darüber hinaus wird in den Figuren 3 bzw. 4 deutlich, dass die Buchsen 4, 5 bzw. die Platten 12, 13 nach außen bzw. an der Stirnseite des Stators 1 Dichtelemente 16 bzw. O-Ringe 16 aufweisen, die die Buchse 4, 5 bzw. Isolierkörper 9, 10 gegen eine Zwischenplatte 18 wirkungsvoll abdichten. Das bedeutet, dass die Ausführungsbeispiele gemäß den Figuren 3 und 4 sich gegenüber dem Ausführungsbeispiel gemäß Figur 1 durch das Vorhandensein einer stirnseitig am Stator 1 angeordneten Zwischenplatte 18 unterscheidet.

In vorteilhafter Weise ist eine Zwischenplatte 18 vorhanden, die einerseits eine stirnseitige Abdichtung des Stators 1 ermöglicht und andererseits zu einer Verfestigung bzw. Stabilisierung des Stators 1 führt. So ist die Zwischenplatte 1 als stirnseitiges Statorgehäuseelement ausgebildet. Ohne nähere Darstellung kann stirnseitig am Statorring 11 eine Dichtung bzw. ein O-Ring vorhanden bzw. angeordnet werden, der sich vollständig über den gesamten Umfang des Stators 1 erstreckt, das heißt auch durchgehend über die Bereiche der Buchsen 4, 5 bzw. Platten 12, 13, sodass eine vollständige Abdichtung, vorzugsweise mit Hilfe der Zwischenplatte 18, über den gesamten Umfang und ohne Unterbrechung realisierbar ist. Dies führt zu einer besonders vorteilhaften Abdichtung des Stators 1 gegenüber der Umgebung bzw. gegenüber möglicherweise im Betrieb vorhandenes Spritzwasser bzw. Kühlschmiermittel oder dergleichen. Hierfür kann beispielsweise der Ring 11 ohne nähere Darstellung bzw. im Unterschied zur Darstellung gemäß Figur 2 sich vollständig über die gesamte Umfangsfläche bzw. den gesamten Umfang des Stators 1 an der Stirnseite erstrecken. Das heißt, dass nicht wie dargestellt, der Ring 11 im Bereich der Platten 12, 13 unterbrochen bzw. sehr dünn ausgebildet ist, sondern dass der Ring 11 sich auch möglichst außenseitig bzw. in radialer Richtung nach außen betrachtet über die Bereiche der Platten 12, 13 bzw. Buchsen 4, 5 erstreckt, sodass in vorteilhafter Weise die Buchsen 4, 5 bzw. Platten 12, 13 in radialer Richtung betrachtet innerhalb der Dichtfläche bzw. eines entsprechenden O-Rings oder dergleichen angeordnet werden können.

Vor allem in den Figuren 3 und 4 wird auch deutlich, dass die Trennstelle bzw. die sog. erste Verbindungsvorrichtung gemäß der Erfindung, d.h. die Buchsen 4, 5 bzw. Körper 9, 10, sich innerhalb der Kontur bzw. Umrisslinie des Stators 1 bzw. innerhalb der Ober- bzw. Außenflächen des Stators 1 befinden. D.h. dass die diese Trennstelle sich innerhalb der Mantelfläche des Stators 1 bzw. des Statorgehäuse 8 und/oder Kühlgehäuse 8 sowie innerhalb der stirnseitigen Oberfläche des Statorrings 11 befindet.

Zugleich wird deutlich, dass eine vorteilhafte Abdichtung der Buchsen 4, 5 nach innen im Stator 1 durch den Kontakt bzw. das Um-/Eingießen des noch flüssigen Vergusses 11 um/mit den entsprechenden Komponenten in vorteilhafter Weise realisiert wird. Zudem wird durch das Vorhandensein der vorteilhaften O-Ringe 16, 17 bzw. Mittelplatte 18 eine wirkungsvolle Abdichtung des Steckers 2, 3 gegenüber dem Stator 1 realisiert. Diese Ausführungsbeispiele der Erfindung verwirklichen eine vollständige, flüssigkeitsdichte, lösbar verbindbare Trennstelle.

Darüber hinaus wird dadurch, dass sich die Trennstelle bzw. die erste Verbindungsvorrichtung 4, 5 bzw. Buchse 4, 5 innerhalb der Kontur bzw. innerhalb des Stators 1 befindet, eine vorteilhafte Fertigung des Stators 1 ermöglicht. Beispielsweise stören nicht wie beim Stand der Technik gemäß der DE 34 01 776 A1 aus dem Stator 1 herausragende Anschlusskabel für die Spulen 6 bzw. für einen nicht näher dargestellten Sensor.

Auch kann beispielsweise eine Nach- bzw. Endbearbeitung des Stators 1 durch Aufspannen auf einen Werkstücktisch einer Werkzeugmaschine ohne störende bzw. ohne überstehende, auskragende Komponente an der Stirnseite und/oder an der Mantelfläche des Stators 1 verwirklicht werden. So kann die endgültige Ausformung bzw. Spanbearbeitung und somit die Ausrichtung des Stators 1 in Bezug auf die Motorlängsachse besonders genau generiert werden.

So kann beispielsweise im Unterschied zu einem Stator gemäß der DE 102 35 632 B4 der Anmelderin der erfindungsgemäße Stator 1 beispielsweise auf einen Werkstücktisch einer spanerzeugenden Werkzeugmaschine montiert bzw. aufgespannt werden, wobei z.B. der eingegossene stirnseitige Statorring 11 und/oder das Gehäuse 8 eine vorteilhafte Auflage auf dem Werkstücktisch der entsprechenden Werkzeugmaschine bildet. Bei einem derart vorteilhaft aufgespannten bzw. montierten Stator 1 gemäß der Erfindung bzw. entsprechender Ausführungsformen kann dann eine planseitige Bearbeitung des gegenüberliegenden Bereiches bzw. der gegenüberliegenden Stirnseite des Stators 1 als auch eine exakte Nachbearbeitung bzw. orthogonale Ausrichtung der Mantelfläche des Stators 1 erfolgen. Hierdurch werden besonders genaue bzw. maßhaltige Statoren 1 gemäß der Erfindung realisierbar, was im Betrieb bzw. bei der Anwendung als Motorspindel, Drehtisch, Mehrachsendrehkopf oder dergleichen von besonderem Vorteil ist.

Grundsätzlich können erfindungsgemäße Werkzeugmaschineneinheiten in vorteilhafter Weise als Torquemotoren bzw. Direktantriebe bei Werkzeugmaschinen oder dergleichen eingesetzt werden.

Darüber hinaus kann gemäß einer vorteilhaften Ausführungsform des Steckers 2 bzw. der Buchsen 4 eine Anpassung an unterschiedliche, jedoch ggf. standardisierte Durchmesser des Stators 1 erfolgen. Beispielsweise sind die einzelnen Anschlussbuchsen 4 des Leistungssteckers 2 gelenkig miteinander verbunden, sodass diese an unterschiedliche Durchmesser des Stators 1 anpassbar sind und beispielweise bei modulartigen Werkzeugmaschineneinheiten in großer Stückzahl hergestellt und eingesetzt werden können. Die entsprechend flexiblen Stecker 2 bzw. Buchsen 4 können beispielsweise durch die Stecker- bzw. Buchsenplatte 12 und/oder durch das Statorgehäuse 21 in vorteilhafter Weise festgelegt werden.

Die nicht nähere dargestellten Spulenenden der Spulen 6 können insbesondere bei einem mehrpoligen Stator 1 ebenfalls standardisiert in vorteilhafter Weise mit dem Isolierkörper 9 unlösbar verbunden und eingegossen werden. Beispielsweise werden die Spulenenden quer zur Einsteckrichtung des Steckers 2, insbesondere versetzt zueinander, angeordnet.

In Figur 3 wird zudem deutlich, dass je Anschluss ein Steckerzapfen vorgesehen ist, der in den Isolierkörper 9 der Buchse 4 bzw. 5 so weit hineinragt, dass dieser für die zwei dargestellten, verschiedenen Varianten, nämlich mit einer Zwischenplatte 8 oder ohne eine Zwischenplatte 18 (vgl. Figur 1 gegenüber Figuren 3 und 4), einen sicheren elektrischen Kontakt gewährleistet.

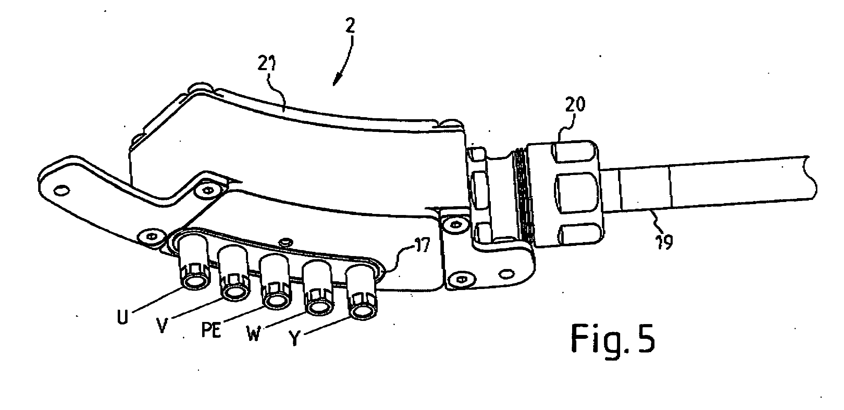

In Figur 5 ist schematisch der Leistungsstecker 2 perspektivisch abgebildet, wobei deutlich wird, dass ein Anschlusskabel 19 über einen Klemmhalter 20 mit einem Steckergehäuse 21 verbunden ist. Sowohl zwischen dem Kabel 19 als auch dem Halter 20 und dem Gehäuse 21 sind vorteilhafte Dichtungen realisiert und zudem ist das Gehäuse 21 ebenfalls in vorteilhafter Weise abgedichtet, sodass mit Hilfe der Dichtung 17 bzw. O-Ringen 17 eine vollständige dichte Trennstelle realisierbar ist.

Vorzugsweise wird der Stecker 2 am Stator 1 bzw. an der Zwischenplatte 18 fest fixiert bzw. angeschraubt, sodass eine vorteilhafte Anpresskraft auf die entsprechenden Dichtelemente bzw. O-Ringe 16, 17 wirkt, wodurch eine sichere flüssigkeitsdichte Abdichtung realisiert wird.

Gemäß der Erfindung kann ein Stator 1 in vorteilhafter Weise hergestellt werden, nämlich ohne störende bzw. aus dem Stator 1 herausragende Kabel und auch ohne überstehende bzw. herausragende Komponenten, die über der Kontur des Stators 1 hinaus stehen. Dies ist auch bei der Montage und Demontage der Werkzeugmaschineneinheit von großem Vorteil.

Ein derartiger Stator 1 kann nämlich beispielsweise bei den sehr beengten Platzverhältnissen in einer modernen Werkzeugmaschine separat montiert und demontiert werden, ohne dass wie beim Stand der Technik die zum Teil derzeit über mehrere Meter lange, nicht lösbar mit dem Stator 1 verbundenen Anschlusskabel umständlich entsprechend innerhalb der Werkzeugmaschine eingefädelt und ausgefädelt werden müssen.

Gemäß den Ausführungsformen, die in der Zeichnung dargestellt sind, kann der Stecker 2 bzw. 3 vom Stator 1 getrennt und der Stator 1 dann entsprechend demontiert bzw. ein neuer bzw. ein reparierter Stator 1 montiert werden, und dies ohne großen Aufwand (ohne Kabel-Demontage und anschließender Kabel-Montage).

In einer vorteilhaften Ausführungsform kann der Stecker 2 und der Stecker 3 auch einstückig als eine einzige Baueinheit ausgeführt werden. Das bedeutet, dass sowohl die elektrischen Leistungsanschlüsse als auch die Sensoranschlüsse in einer einzigen Baueinheit bzw. in einem einzigen Steckergehäuse 21 integriert sind, sodass lediglich ein einziger Steckvorgang zur Herstellung aller elektrischen Verbindungen mit dem Stator 1 ausreichend ist.

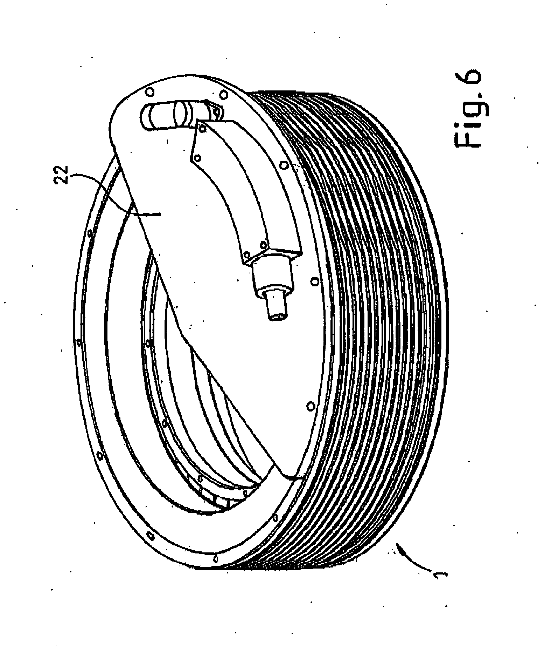

Die ausführungsgemäße Figur 6 zeigt einen Stator 1 mit einer Abschlussplatte 22. Die Abschlussplatte 22 deckt die eine Stirnseite des Stators 1 teilweise ab. Hierdurch sind die oben angeführten Vorteile der Kapselung aller Anschlusselemente, der Kraftübertragung bei der Befestigung des Mototrs in der Umgebungskonstruktion sowie die Variabilität zur Anpassung an unterschiedliche Erfordernisse der Umgebungskonstruktions erzielbar.

Der Stator 1 kann dabei so ausgestaltet werden wie in den vorbeschriebenen Ausführungsformen, wobei lediglich die Abdeckplatte 22 ergänzt wird.

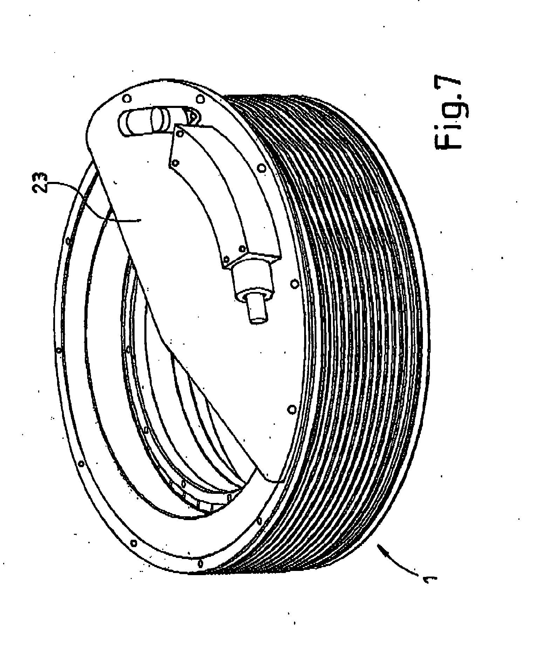

Figur 7 zeigt eine Ausführungsform entsprechend der Ausführungsform nach Figur 6, wobei hierbei eine dickere Abschlussplatte 23 vorgesehen ist. Die unterschiedliche Dicke zwischen den Ausführunsgform gemäß Figur 6 und Figur 7 der Abschlussplatte veranschaulicht die variable Anpassung an die konstruktiven Erfordernisse der Umgebung.

### Bezugszeichenliste

- 1: Stator
- 2: Stecker
- 3: Stecker
- 4: Buchse
- 5: Buchse
- 6: Spule
- 7: Verguss
- 8: Gehäuse
- 9: Isolierkörper
- 10: Isolierkörper
- 11: Ring
- 12: Platte
- 13: Platte
- 14: Rotor
- 15: Magnet
- 16: O-Ring
- 17: O-Ring
- 18: Platte
- 19: Kabel
- 20: Halter
- 21: Gehäuse
- 22: Abschlussplatte
- 23: Abschlussplatte

## Patentansprüche

1. Motorisch angetriebene Werkzeugmaschineneinheit wie ein Mehrachsendrehkopf, eine Motorspindel, ein Drehtisch oder dergleichen mit einer einen elektromagnetischen Stator (1) umfassende Statoreinheit und einer wenigstens eine um eine Drehachse drehbare Rotorwelle aufweisende Rotoreinheit (14), wobei die Statoreinheit eine erste Verbindungsvorrichtung (4, 5, 9, 10) zum elektrisch leitenden Verbinden wenigstens eines Spulenanschlusses und/oder eines Statorsensors mit einer zweiten Verbindungsvorrichtung (2, 3) einer elektrischen Energieversorgung und/oder einer Sensorauswerteeinheit umfasst, wobei wenigstens eine lösbar verbindbare Trennstelle zum Trennen und Verbinden der ersten Verbindungsvorrichtung (4, 5, 9, 10) mit der zweiten Verbindungsvorrichtung (2, 3) vorgesehen ist, **dadurch gekennzeichnet, dass** die lösbar verbindbare Trennstelle und/oder die erste Verbindungsvorrichtung (4, 5, 9, 10) innerhalb der Kontur des Stators (1) angeordnet ist.

2. Werkzeugmaschineneinheit nach Anspruch 1, **dadurch gekennzeichnet, dass** die lösbar verbindbare Trennstelle und/oder die erste Verbindungsvorrichtung (4, 5, 9, 10) keinen Überstand über eine Außenseite und/oder Mantelfläche (8) und/oder Stirnseite (11) des Stators (1) aufweist.

3. Werkzeugmaschineneinheit nach einem der vorgenannten Ansprüche, **dadurch gekennzeichnet, dass** ein verfestigtes und/oder erhärtetes Gusselement (7) wenigstens teilweise an der ersten Verbindungsvorrichtung (4, 5, 9, 10) angeordnet ist.

4. Werkzeugmaschineneinheit nach einem der vorgenannten Ansprüche, **dadurch gekennzeichnet, dass** ein verfestigtes und/oder erhärtetes Gusselement (7) wenigstens teilweise als Ummantelung (7) der ersten Verbindungsvorrichtung (4, 5, 9, 10) ausgebildet ist.

5. Werkzeugmaschineneinheit nach einem der vorgenannten Ansprüche, **dadurch gekennzeichnet, dass** das Gusselement (7) als elektrische Isolationsschicht (7) zum elektrischen Isolieren einer elektromagnetischen Spule (6) ausgebildet ist.

6. Werkzeugmaschineneinheit nach einem der vorgenannten Ansprüche, **dadurch gekennzeichnet, dass** die erste und/oder zweite Verbindungsvorrichtung (2, 3, 4, 5, 9, 10) wenigstens ein Dichtelement (16, 17) zum flüssigkeitsdichten Abdichten aufweist.

7. Werkzeugmaschineneinheit nach einem der vorgenannten Ansprüche, **dadurch gekennzeichnet, dass** der Stator (1) wenigstens eine zwischen der ersten und der zweiten Verbindungsvorrichtung (2, 3, 4, 5, 9, 10) angeordnete Zwischenplatte (18) aufweist.

8. Werkzeugmaschineneinheit nach einem der vorgenannten Ansprüche, **dadurch gekennzeichnet, dass** die Zwischenplatte (18) auf zwei gegenüberliegenden Seitenflächen jeweils wenigstens ein Dichtelement (16, 17) zum Abdichten der Zwischenplatte (18) gegenüber der ersten und/oder der zweiten Verbindungsvorrichtung (2, 3, 4, 5, 9, 10) aufweist.

9. Werkzeugmaschineneinheit nach einem der vorgenannten Ansprüche, **dadurch gekennzeichnet, dass** der Stator (1) ein Kühlgehäuse (8) aufweist.

10. Werkzeugmaschineneinheit nach einem der vorgenannten Ansprüche, **dadurch gekennzeichnet, dass** das Kühlgehäuse (8) wenigstens teilweise als Ummantelung des Gusselementes (7) ausgebildet ist.

11. Werkzeugmaschineneinheit nach einem der vorgenannten Ansprüche, **dadurch gekennzeichnet, dass** an wenigstens einer Stirnseite des Stators (1) eine Abschlussplatte (22, 23) vorgesehen ist, die die Stirnseite des Stators (1) wenigstens teilweise abdeckt und zur Kapselung des Motors gegenüber der Umgebungskonstruktion und/oder zur Kraft- beziehungsweise Drehmomentübertragung an die Umgebungsbauteile und/oder zur variablen Anpassung an die Umgebungskonstruktion verwendbar ist.
